(19)

**Europäisches Patentamt**
**European Patent Office**
**Office européen des brevets**

(11) **EP 1 269 670 B1**

(12) **EUROPEAN PATENT SPECIFICATION**

(45) Date of publication and mention of the grant of the patent:
**05.01.2011 Bulletin 2011/01**

(51) Int Cl.:
**H04J 3/12** (2006.01)

(21) Application number: **01919726.8**

(22) Date of filing: **28.03.2001**

(86) International application number:
**PCT/IL2001/000292**

(87) International publication number:
**WO 2001/076118 (11.10.2001 Gazette 2001/41)**

(54) **TRANSMISSION OF STATIONARY SIGNALS IN QUIESCENT MODE**

ÜBERTRAGUNG STATIONÄRER SIGNALE IM RUHEMODUS

EMISSION DE SIGNAUX STATIONNAIRES EN MODE DE REPOS

(84) Designated Contracting States:
**DE FR GB IT**

(30) Priority: **04.04.2000 IL 13546700**
**17.04.2000 IL 13569300**
**24.07.2000 US 220334 P**

(43) Date of publication of application:
**02.01.2003 Bulletin 2003/01**

(73) Proprietor: **Tioga Technologies**
**San Jose, CA 95131 (US)**

(72) Inventors:
• **VERBIN, Rami**
**69122 Tel Aviv (IL)**

• **FRENKEL, Liron**
**42655 Netanya (IL)**

(74) Representative: **Bosotti, Luciano et al**
**Buzzi, Notaro & Antonielli d'Oulx**
**Via Maria Vittoria, 18**
**10123 Torino (IT)**

(56) References cited:
**EP-A- 0 883 269     EP-A- 0 961 515**
**WO-A-99/52219     US-A- 6 031 826**
**US-A- 6 052 411     US-B1- 6 201 830**

**Description**

**CROSS-REFERENCE TO RELATED APPLICATION**

This application claims the benefit of U.S. Provisional Patent Application 60/220,334, filed July 24, 2000.

**FIELD OF THE INVENTION**

The present invention relates generally to high speed data transmission, and specifically to methods and devices for reducing power consumption during idle periods in data transmission.

**BACKGROUND OF THE INVENTION**

Power consumption is a crucial factor in the deployment of Digital Subscriber Line (DSL) modems. As technology evolves, the power consumption of the digital part of the modem can be reduced significantly by using new processes, such as moving from 0.5 $\mu$m semiconductor devices to 0.25 $\mu$m and 0.18 $\mu$m devices. In contrast to the digital part, the power consumption of the analog part of the modem remains largely unchanged, and thus becomes the most significant factor in overall power consumption.

One approach to reducing the power consumption takes advantage of the large periods of time in which the transmission includes only idle information, such as ATM idle cells. This approach defines a quiescent mode, or Q-mode, which the modem transmitter enters during these idle periods. Possible characteristics for Q-mode operation have been proposed in contributions to the International Telecommunications Union (ITU), such as contribution D.282, by 3Com Corporation, and contribution D.415, by Alcatel. These contributions are incorporated herein by reference.

Q-mode proposals to date have focused on discrete multi-tone (DMT) transmission methods, which are used in Asymmetric DSL (ADSL). These proposals are based mainly on limiting transmission during idle periods to a single tone, preferably the pilot tone that is normally used for frequency tracking. The advantages of the pilot tone method include:

- Very low power consumption - transmitting only about 1/256 of the total nominal power of the transmitter.
- Continuous frequency tracking, so that the transmitter and receiver remain locked to the proper frequency.
- Very simple to implement in the transmitter.
- Easy to detect at the receiving end.

This solution suffers from a significant problem, however: it creates a non-stationary noise environment for neighboring modems. The spectral profile of crosstalk noise received by other modems (known as far end crosstalk - FEXT - and near end crosstalk - NEXT) is not constant in time. The noise is low during Q-mode operation, because only one carrier is transmitted, but it increases sharply when the modem returns to its normal transmit mode, in which most of the 256 ADSL carriers are used. The sensitivity of ADSL receivers to non-stationary cross talk varies with frequency and with the type of interference (NEXT or FEXT), as described in contribution D.832 to the ITU, by Alcatel, entitled "Effects of Pulsating Crosstalk on Vintage ADSL modems," which is incorporated herein by reference.

The result of this non-stationary behavior is performance degradation. The ADSL receiver tracks the noise and attempts to adapt to its particular characteristics so as to maximize the noise margin or the data rate. The modem cannot track the sharp changes in the noise floor due to Q-mode transitions, however, and the result is a long burst of errors upon every transition. This error burst may be severe enough to cause the modem to "retrain" for the altered noise conditions. Such retraining is undesirable, because it interrupts modem service for several seconds. Proposed techniques for dealing with non-stationary crosstalk due to Q-mode transitions are described in contributions TD22 and TD26 to Standards Committee TM6 of the European Telecommunications Standards Institute (ETSI), submitted by Alcatel. These contributions are incorporated herein by reference. Implementation of these proposed techniques would require modification and/or reprogramming of currently-deployed modems.

Another approach for reducing transmitter power consumption is to dynamically switch the power supply voltage of the transmitter between two levels. This method does not require any special signal for Q-mode, and actually does not require a Q-mode at all. It is applied to the transmitted signal while the modem operates in its normal data mode. The disadvantage of this method is that it requires very rapid switching of the power supply, typically within less than 2 $\mu$sec switching time. Such fast switching is likely to degrade the linearity of the transmitter's line driver. For this reason, the idea of voltage switching has not been adopted in any practical modem. Contribution D.835 to the ITU, by Alcatel, notes that power consumption of an ADSL transmitter can be reduced by static reduction of the line driver supply voltage and bias current. The contribution indicates that there is a need for dynamic power saving methods. It concludes, however, that further study of the degrading effects of non-stationary crosstalk is required in order to define an optimal dynamic power saving technique.

Document WO99/52219 discloses a system and method for generating and repetitively transmitting a single modulated symbol during idle periods in user data in a digital subscriber line (DSL) communication system. The modulated symbol to be transmitted is selected such that its spectral properties mach those of user data modulated symbols.

Document EP 0 961 515 discloses a multi-carrier modulator in which data symbols are modulated on at least one carrier in accordance with at least one constellation scheme. Idle data symbols are replaced by null data symbols which are associated with a low power constellation point of the at least one constellation scheme, in order to transfer idle data symbols with minimised power.

## SUMMARY OF THE INVENTION

It is an object of some aspects of the present invention to provide an improved method for reducing power consumption of a transmitter during idle periods and to provide transmitters that implement the method.

It is a further object of some aspects of the present invention to provide a quiescent mode of operation for a high-speed modem that maintains a stationary noise environment.

Preferably, the peak-to-average ratio (PAR), or crest factor, of transmitted signals is reduced in the quiescent mode. Alternatively or additionally, the transmitted signals in the quiescent mode are optimized to reduce other power consumption characteristics and to meet other criteria associated with different line driver technologies.

It is yet a further object of some aspects of the present invention to provide a family of quiescent mode signals and a method for generating a signal in the family that is optimized for a particular transmitter, in a manner that is transparent to a receiver of the signal. Preferably, the optimization also takes into account the normal performance of the transmitter, such as the specific DMT carriers that are transmitted during"ShowTime."

In preferred embodiments of the present invention, a high-speed data transmitter transmits data signals over a communication line to a receiver, with a characteristic frequency spectrum and PAR, based on a stream of input data. When there is an idle interval in the input data, such as a period of silence or idle cells, indicating that there is no information to transmit, the transmitter generates an idle signal. The idle signal is based on a sequence of data values, which is selected so as to give a frequency spectrum that is similar to that of the data signals, while its PAR is substantially lower than the data signal PAR. Because of the similarity of the frequency spectra of the data and idle signals, the NEXT and FEXT generated at neighboring receivers remain substantially stationary. The need for these receivers to adapt to changing noise conditions as the transmitter switches between data transmission and idle mode is thus minimized. Because of the low PAR of the idle signal, however, the power consumption of the transmitter in idle mode can be substantially reduced.

In some preferred embodiments of the present invention, the transmitter and receivers belong to a system of ADSL modems, and the idle mode of the transmitter is an ADSL Q-mode. The sequence of data values used to generate the idle signal is preferably based on a predefined complex sequence, or vector, in the frequency domain. The signal based on this predefined sequence is referred to hereinafter as the "nominal signal." Such a signal may be defined in advance, by a standard, for example, or it may be communicated during an initial phase preceding the first Q-mode transition. For ADSL, the sequence is preferably selected so that the nominal signal will have certain desirable characteristics at the line driver input, such as low PAR, while using only four quadrature amplitude modulation (4QAM) constellation points.

Most preferably, the sequence is a pseudo-random sequence that is already defined by ADSL standards, such as the "Reverb" signal. A sequence of this sort is advantageous in that it is already in use in ADSL modems known in the art, as defined in the ITU G.dmt (or 992. 1) standard, which is incorporated herein by reference. As a result of using a predefined sequence, such as the Reverb signal, idle signals based on this sequence can be detected and processed by both existing and new ADSL receivers substantially without reprogramming. While the PAR of ADSL data signals is usually high, typically in the 15-17 dB range, the Reverb signal has a substantially lower PAR, typically about 8.5 dB. Thus, although the transmitter consumes more power in Q-mode than it would if it were generating only the single pilot tone (as in the Q-mode proposals described in the Background of the Invention), it has the advantage of full compatibility with existing, installed modems.

In some preferred embodiments of the present invention, the Reverb sequence or other predefined sequence used to create the nominal signal is modified in order to reduce its PAR still further. The modification is constrained, however, in order to keep the complex values in the sequence within a predetermined margin of their nominal values, so that the resultant idle signal can still be identified and processed by the receiver as the Reverb or other nominal signal. In other words, a small amount of distortion is intentionally introduced into the nominal signal in order to reduce the PAR, typically to about 5 dB, but this distortion is transparent to the receiver. Preferably, an optimal modification of the nominal sequence is calculated so as to minimize the PAR at the line driver input for the specific characteristics of the output circuits of the transmitter. Further preferably, the phase of the complex values in the sequence is varied intermittently, by a $\pm 90°$ or 180° shift, for example, in order to flatten the transmit spectrum and to avoid situations in which an adaptive receiver develops a fixed phase bias due to the idle signal.

In preferred embodiments of the present invention, the power consumption of the transmitter is reduced by switching the voltage supplied to the transmitter's line driver circuit to a lower level when the transmitter goes into the idle mode. This voltage switching is made possible by the reduced PAR of the idle mode signal. Preferably, the bias current is also decreased in idle mode, even at the cost of introducing a limited amount of distortion at the line driver. Additionally or alternatively, the power level of the idle mode signal is decreased by a small amount to further decrease the line driver power consumption. This decrease in the signal power is typically limited to about 1-2 dB in order to ensure that the crosstalk environment remains largely stationary. The reduction of the power supply voltage, bias current, and/or signal power has the effect of reducing the current drawn by the line driver.

Further additionally or alternatively, the idle mode signal can be switched on and off with some duty cycle. During "off" periods, only the pilot tone or a limited set of carriers is transmitted, while during "on" periods the stationary idle signal is transmitted. This combination of the two signals allows a very efficient design of the idle signal according to an allowed level of non-stationarity, with lower power consumption than could be achieved simply by decreasing the transmit power. The reason for this enhanced efficiency is that during the "off" periods, both the AC and DC parts of the power consumption are reduced. Preferably, the "on" and the "off" signals are derived from the same nominal signal or, alternatively, from two different nominal signals. As mentioned above, the phases of both the "on" and "off" signals are preferably altered from time to time. Most preferably, the transmitter switches between the "on" and "off" signals at random, while maintaining a fixed overall duty cycle between the signals.

Preferably, the low-PAR idle mode signal is optimized for the specific digital and analog characteristics of the front end of the transmitter (including shaping filters and line driver). This optimization most preferably takes into account the transmitter's utilization of frequency carriers, so that the idle mode signal uses the same carriers as are used by the transmitter during normal (ShowTime) operation, thereby strictly observing the stationarity requirement.

As noted hereinabove, the sensitivity to non-stationary cross talk varies with frequency and with the type of interference (NEXT or FEXT). Therefore, in some cases, not all of the carriers need to be transmitted for the sake of keeping the noise environment stationary. When only part of the spectrum is sensitive to crosstalk, some of the carriers may be switched off without harming the stationarity of the noise seen by other modems, so that the idle mode signal preferably comprises only a subset of the available carriers that are sensitive to crosstalk. This approach may also be used with the on-off switched variant of the idle mode signal, as described above, so that both the "on" and the "off" signals comprise only such subsets of the available carriers. Most preferably, the "on" signal comprises the crosstalk-sensitive carriers, while the "off" signal comprises only the pilot tone.

Although preferred embodiments are described herein mainly with reference to ADSL modems and standards, the principles of the present invention may similarly be applied to other DSL systems, such as Very High Rate DSL (VDSL), as well as to high-speed data transmission systems of other types.

There is therefore provided, in accordance with a preferred embodiment of the present invention, a method for transmission of high-speed digital signals, including:

transmitting a data signal over a communication line responsive to input data, which data signal is characterized by a frequency spectrum and a power consumption characteristic, such as a peak-to-average ratio (PAR); and
during an idle interval in the input data, transmitting an idle signal whose frequency spectrum is substantially stationary relative to the frequency spectrum of the data signal and whose power consumption characteristic is substantially reduced relative to the data signal.

Preferably, the PAR of the idle signal is at least 3 dB below the PAR of the data signal, more preferably at least 6 dB below the PAR of the data signal, and most preferably at least 10 dB below the PAR of the data signal. Further preferably, the PAR of the idle signal is less than 10 dB, and more preferably no greater than about 7 dB.

Preferably, transmitting the data signal includes operating a line driver at a predetermined supply voltage, and transmitting the idle signal includes reducing the supply voltage of the line driver during the idle interval. Additionally or alternatively, transmitting the data signal includes operating a line driver at a predetermined bias current, and transmitting the idle signal includes reducing the bias current to the line driver during the idle interval.

Preferably, transmitting the idle signal includes generating a periodic signal, or a sequence of related periodic signals.

Preferably, transmitting the idle signal includes generating the idle signal based on a nominal sequence of varying complex values, most preferably based on a predefined standard signal recognizable by a receiver of the data signal. In a preferred embodiment, transmitting the data signal includes transmitting an Asymmetric Digital Subscriber Line (ADSL) signal, and generating the idle signal based on the nominal sequence of complex values includes generating a Q-mode signal based on an ADSL Reverb signal.

Additionally or alternatively, generating the idle signal based on the predefined standard signal includes reducing a power level of the idle signal relative to the standard signal. Preferably, reducing the power level of the idle signal includes alternately increasing and decreasing the power level. Most preferably, decreasing the power level includes transmitting a pilot tone in place of signal based on the nominal sequence of complex values, and increasing the power level includes transmitting the signal based on the nominal sequence of varying complex values. In a preferred embodiment, the data signal includes a discrete multi-tone signal including a set of tones, and reducing the power level of the idle signal includes eliminating one or more of the tones from the idle signal, preferably by selecting tones to be eliminated based on crosstalk characteristics associated with the transmission. It should be noted that for the "on-off" mode of the idle signal, the set of carriers used during the "on" period may be different from the set used during the "off" period.

Further preferably, generating the idle signal based on the nominal sequence of complex values includes modifying the complex values so as to reduce the PAR of the idle signal. Most preferably, generating the idle signal based on the nominal sequence of complex values includes generating the idle signal based on a predefined standard signal recognizable by a receiver of the data signal, and modifying the complex values includes modifying the values by no more than a predetermined amount, such that the idle signal is recognizable by the receiver as the predefined standard signal notwithstanding the changes.

In a preferred embodiment, the data and idle signals have a predefined symbol rate, and transmitting the data and idle signals includes passing the signals through a shaping filter having a filter response, and modifying the complex values includes:

upsampling the nominal sequence by a predetermined factor;
applying the filter response to the upsampled sequence to generate a shaped sequence;
applying one or more constraints to the shaped sequence in a time domain to generate a constrained sequence;
determining an input sequence to the shaping filter that will yield the constrained sequence upon application of the filter response to the input sequence; and
applying one or more constraints to the input sequence in a frequency domain so as to derive the modified complex values.

Preferably, applying the one or more constraints in the time domain includes limiting an amplitude of the shaped sequence in accordance with a predetermined maximum power consumption characteristic. Additionally or alternatively, determining the input sequence to the shaping filter includes dividing the transformed sequence in the frequency domain by the filter response. Further additionally or alternatively, applying the one or more constraints in the frequency domain includes modifying the input sequence so as to maintain a symmetry of in-band and out-of-band components of the sequence in the frequency domain. Preferably, the method takes into account the filtering of the shaping filter, which normally cuts off the high-frequency components of the input sequence. In a further preferred embodiment, the method includes repeating the steps of applying the filter response, applying the one or more constraints in the time domain, determining the input sequence, and applying the one or more constraints in the frequency domain, using the modified complex values as an input in place of the upsampled sequence.

In a preferred embodiment, transmitting the idle signal includes, during the idle interval, transmitting the idle signal whose frequency spectrum is substantially stationary in alternation with a non-stationary signal, preferably while controlling the signals so that a transmit spectrum of the signals is non-stationary only to within an allowed limit of non-stationarity. Preferably, the non-stationary signal is chosen so as to have a substantially lower power consumption characteristic than the idle signal whose frequency spectrum is substantially stationary. Further preferably, the data and idle signals include multiple tones, and the non-stationary signal includes a substantially reduced number of tones relative to the idle signal whose frequency spectrum is substantially stationary. Most preferably, the non-stationary signal consists of a pilot tone.

Preferably, transmitting the idle signal includes setting a duty cycle for alternation between the idle signal whose frequency spectrum is substantially stationary and the non-stationary signal, and transmitting the signals in accordance with the set duty cycle.

Additionally or alternatively, transmitting the idle signal whose frequency spectrum is substantially stationary in alternation with a non-stationary signal includes intermittently altering the phase of the signals, whereby a spectrum of the signals is flattened, and a bias in the signals is cancelled. Preferably, intermittently altering the phase of the idle signals includes shifting the phase at random by multiples of 90 degrees.

There is also provided, in accordance with a preferred embodiment of the present invention, a method for transmission of high-speed digital signals, including:

transmitting a data signal over a communication line responsive to input data, which data signal is characterized by a frequency spectrum;
generating an idle signal based on a nominal sequence of varying complex values in the frequency domain, the idle signal having a frequency spectrum that is substantially stationary relative to the frequency spectrum of the data signal; and
during an idle interval in the input data, transmitting the idle signal over the communication line.

Preferably, generating the idle signal based on the nominal sequence of complex values includes generating a quadrature amplitude modulation (QAM) signal, most preferably including values given by $+1\pm j$. Further preferably, generating the idle signal includes modifying the complex values of the nominal sequence so as to reduce a peak-to-average ratio (PAR) of the idle signal. Additionally or alternatively, transmitting the idle signal includes intermittently altering a phase of the idle signal, whereby a bias in the signal is cancelled.

Further additionally or alternatively, generating the idle signal includes conveying a definition of the signal from a transmitter of the data and idle signals to the receiver before transmitting the idle signal.

In a preferred embodiment, transmitting the idle signal includes, during the idle interval, transmitting as a first idle signal the idle signal whose frequency spectrum is substantially stationary in alternation with a second idle signal whose frequency spectrum is non-stationary.

There is additionally provided, in accordance with a preferred embodiment of the present invention, apparatus for transmission of high-speed digital signals, including:

a data encoder, which is adapted to receive input data and to generate a stream of data symbols responsive to the input data and further to generate, during an idle interval in the input data, a sequence of idle symbols;

a shaping filter, coupled to receive the stream of data symbols from the signal generator and to generate, responsive thereto, a data signal characterized by a frequency spectrum and a power consumption characteristic, and to receive the sequence of idle symbols and to generate, responsive thereto, an idle signal whose frequency spectrum is substantially stationary relative to the frequency spectrum of the data signal and having a power consumption characteristic that is substantially reduced relative to the data signal; and

a line driver, coupled to receive the data signal and the idle signal from the shaping filter and to transmit the signals over a line to a receiver.

Preferably, the apparatus includes a power supply, which is coupled to provide a predetermined supply voltage to the line driver during transmission of the data signal, and which is adapted to switch the supply voltage of the line driver to a value substantially lower than the predetermined supply voltage during the idle interval.

Additionally or alternatively, the apparatus includes a bias current controller, which is coupled to provide a predetermined bias current to the line driver during transmission of the data signal, and which is adapted to reduce the bias current to the line driver during the idle interval.

There is further provided, in accordance with a preferred embodiment of the present invention, apparatus for transmission of high-speed digital signals, including:

a data encoder, which is adapted to receive input data and to generate a stream of data symbols responsive to the input data and further to generate, during an idle interval in the input data, a sequence of idle symbols based on a nominal sequence of varying complex values in the frequency domain;

a shaping filter, coupled to receive the stream of data symbols from the signal generator and to generate, responsive thereto, a data signal characterized by a frequency spectrum, and to receive the sequence of idle symbols and to generate, responsive thereto, an idle signal whose frequency spectrum is substantially stationary relative to the frequency spectrum of the data signal; and

a line driver, coupled to receive the data signal and the idle signal from the shaping filter and to transmit the signals over a line to a receiver.

The present invention will be more fully understood from the following detailed description of the preferred embodiments thereof, taken together with the drawings in which:

**BRIEF DESCRIPTION OF THE DRAWINGS**

Fig. 1 is a block diagram that schematically illustrates a data transmitter, in accordance with a preferred embodiment of the present invention;

Fig. 2 is a block diagram that schematically illustrates a data encoder for generating an idle mode signal, in accordance with a preferred embodiment of the present invention; and

Fig. 3 is a flow chart that schematically illustrates a method for generating an idle mode signal, in accordance with a preferred embodiment of the present invention.

**DETAILED DESCRIPTION OF PREFERRED EMBODIMENTS**

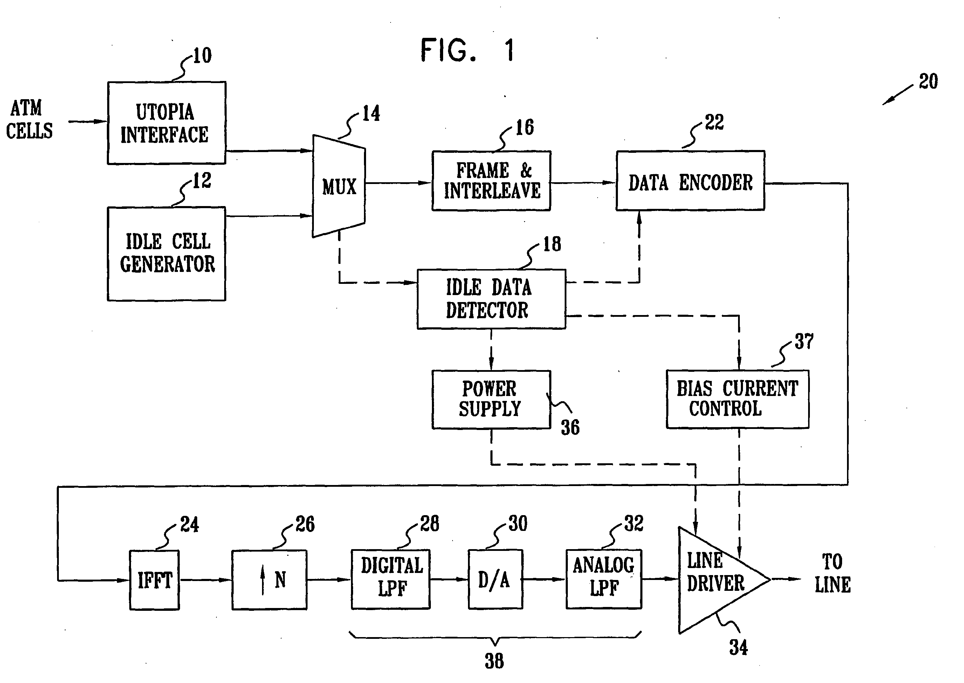

Fig. 1 is a block diagram that schematically illustrates elements of a high-speed data transmitter 20, in accordance with a preferred embodiment of the present invention. The design of transmitter 20 is appropriate for use in an ADSL modem, and the following preferred embodiment will be described with reference to ADSL standards and signals. It will be understood, however, that the devices and methods described hereinbelow may also be used, *mutatis mutandis,* in other data transmission systems and in accordance with other standards. While a particular, simplified block design of transmitter 20 is shown in Fig. 1 for the sake of illustration, other designs that implement the principles of the present invention will be apparent to those skilled in the art. It will also be understood that although different functions are represented in Fig. 1 by different blocks, in practical applications a number of these functions may be carried out by a single integrated circuit device.

Transmitter 20 comprises a data interface, preferably a Utopia interface 10, which receives ATM cells for transmission over a communication line. An idle cell generator 12 generates ATM idle cells, which are selected by a multiplexer 14 when there are no information-bearing cells at interface 10. A framing and interleaving block 16 creates a data frame for transmission, which is then fed to an encoder 22. The encoder encodes the data from the framer 22 into a stream of output symbols, typically DMT symbols as specified by ADSL standards. Each such symbol has the form of a vector with up to 256 complex values in the frequency domain, defined by quadrature amplitude modulation (QAM).

An idle data detector 18 determines when the input data stream is idle, i.e., when the symbols generated by block 14 or 16 contain no meaningful information. Under these conditions, detector 18 causes transmitter 20 to enter an idle mode, also referred to herein as a quiescent mode, or Q-mode. In this mode, detector 18 signals a data encoder 22 to replace the symbols from block 16 with predefined idle mode symbols, as defined hereinbelow.

The symbols output by encoder 22 are transformed into a stream of time-domain samples by an inverse Fast Fourier Transform (IFFT) machine 24, as is known in the art. An interpolator 26 upsamples the stream by a factor N, wherein typically N=4, by adding zeroes between the actual samples. A digital low-pass filter (LPF) 28 is used to filter images created by interpolator 26. A digital to analog (D/A) converter 30 converts the samples to analog form, following which an analog LPF 32 is used to eliminate high-frequency artifacts, particularly images, remaining after the digital filtering. LPF 28, D/A converter 30 and analog LPF 32 can together be characterized by their collective frequency response, and are considered hereinbelow as an equivalent spectral shaping filter 38, which is applied to the signals that are output by transmitter 20.

The output signals from filter 38 are fed to a line driver 34, which sends the signals over a line to a receiver (not shown). A power supply 36 provides DC power to the line driver. The power consumption of the line driver depends, *inter alia,* on the PAR, or crest factor. The PAR is defined as the ratio in dB between the peak level of the output signal and the RMS level. The dependence of the line driver dynamic (AC) power consumption on the PAR in dB is given roughly by the following formula:

$$\text{Power consumption (dBm)} \sim \text{PAR}/2 + \text{transmitted power (dBm)}$$

Since the PAR for ADSL signals is high, typically in the range of 15-17 dB, the contribution of PAR to power consumption is substantial. When the PAR of the output signals is reduced in an idle or quiescent mode (Q-mode) of transmitter 20, as described hereinbelow, the power required from supply 36 can be reduced accordingly.

When transmitter 20 enters the idle mode, idle data detector 18 causes the power consumption by the transmitter to be reduced by switching the voltage provided to line driver 34 by supply 36. Preferably, detector 18 also switches a bias current controller 37 to decrease the DC bias current to line driver 34 to be decreased, as well, thus further saving on power consumption. Decreasing the DC current tends to increase signal distortion introduced by line driver 34. While the transmitter is operating in Q-mode, however, the distortion is of secondary importance, so that the current supplied to line driver 34 may typically be decreased without significant performance degradation.

To clarify this point, it is noted that typically distortions increase with frequency. In ADSL, upstream transmissions from subscribers to the central office generally use lower frequencies, which are less sensitive to distortion, while downstream transmissions from the central office use the higher frequencies. Therefore, decreasing the bias current typically affects the downstream transmission frequencies more than the upstream frequencies. Some distortion of downstream Q-mode signals transmitted from the central office (where reducing power consumption is of most serious concern) can be permitted, since the signals contain substantially no data other than the pilot tone and the nominal signal itself. The distorting effect of the bias current reduction is less significant in the lower-frequency band, which may still convey upstream information while the transmitter is in idle mode.

As noted above, when transmitter 20 enters the idle mode (or Q-mode), encoder 22 outputs a Q-mode signal. This signal comprises a periodic signal based on a selected nominal signal, preferably an ADSL Reverb signal, as defined in the G.dmt standard, or a sequence of such periodic signals with different phase shifts, as described hereinbelow. The nominal signal is defined as a pseudo-random complex sequence in the frequency domain, having the form of a vector of 257 complex values, preferably 4QAM values. (4QAM values, also known as quadrature phase shift keying, or QPSK, values, can be expressed as $\pm 1 \pm j$.) Alternatively, other nominal signals may be used instead of the Reverb.

The nominal signal is chosen so as to afford certain desirable characteristics at the line driver input. These characteristics typically include the desired spectrum (PSD) and statistical behavior, such as low PAR. The nominal signal preferably has roughly the same PSD mask as do normal ADSL signals, typically a generally flat frequency spectrum covering the same frequency range as that of the normal ADSL data signals. These characteristics are preferably achieved while using 4QAM constellation points.

The Reverb signal meets these requirements. As a result, the NEXT and FEXT noise generated due to Q-mode operation of the transmitter will be stationary relative to the noise generated in normal operation, and the PAR in Q-mode will be relatively low. Alternatively, other 4QAM signals that are better fitted to specific transmit path and line driver characteristics may be used. The nominal signal in such a case can be defined by the transmitter and communicated to the receiver.

The Q-mode frequency vector is translated by IFFT machine 24 into a time sequence of 512 samples, corresponding to one ADSL symbol. In the simplest implementation, the Q-mode vector is identical to the standard Reverb vector. This signal has a low PAR, approximately 8.5 dB after interpolation and shaping. Further reduction in the PAR can be achieved, however, by additional adjustments of the complex amplitudes of the vector elements. The adjustments are subject to a number of constraints:

- The PSD of the resultant output Q-mode signal should be close to the PSD of the Reverb signal, to within a predefined tolerance. Preferably, the PSD of the Q-mode signal should be within $\pm 3$ dB of either the nominal PSD or of the actual transmitted PSD of the transmitter in normal (data transmission) mode, in accordance with the actual fine gain settings used in the transmitter.
- The original phases of the carriers in the Reverb signal should also be maintained to within a predefined tolerance. Preferably, the phase deviation of the carriers should be such that the Q-mode signal will be easily detected by the receiver as a Reverb signal, as though the receiver were receiving an actual Reverb signal with a signal/noise ratio of 15-25 dB.
- There should be no bias in the pilot tone in the Q-mode signal. ADSL modems normally use carrier 64 for frequency tracking, but the Q-mode signal may include one or more alternative or additional carriers for frequency tracking.
- The PAR of the Q-mode signal should be as low as possible, preferably less than 7 dB, and most preferably about 5 to 6 dB.

As long as these constraints are observed, the adjustments in the Q-mode signal will remain transparent to the receiver, while allowing the signal to be optimized for the specific characteristics of the digital and analog front-end components of transmitter 20. It is not necessary that all of the 256 ADSL carriers be used in the Q-mode signal. Rather, the number of Q-mode carriers should be equal or close to the number of carriers actually used in normal operation of transmitter 20. The "adjusted" Reverb signal is preferably optimized to use the same carriers that are used in normal operation. Alternatively, in some cases only a subset of the available carriers may be used. In particular, if the crosstalk level on some carriers is very low, then these carriers are preferably eliminated from the Q-mode signal. Preferably, the pilot tone is always included among the Q-mode carriers.

In addition to the above-mentioned variations in the complex values of the Reverb sequence, the power of the Q-mode signal itself may also be decreased. It is not desirable to decrease the total power too much, due to the requirement that the noise spectrum remain stationary. Some room for reduction does exist, however, since practical modems normally work with an extra margin of signal/noise ratio. This margin may be slightly decreased if a small non-stationarity is allowed.

Although the above description relates particularly to a case in which Reverb is chosen as the nominal signal is Reverb, the principles of the description are applicable to substantially any suitable nominal sequence. It is expected that if the nominal sequence is optimized for the specific transmit path in use, a smaller tolerance in the phase and amplitude of the nominal signal will yield the same PAR as the adjusted Reverb signal. Alternatively, lower PAR will be achieved with the same tolerance for distortion of the nominal signal.

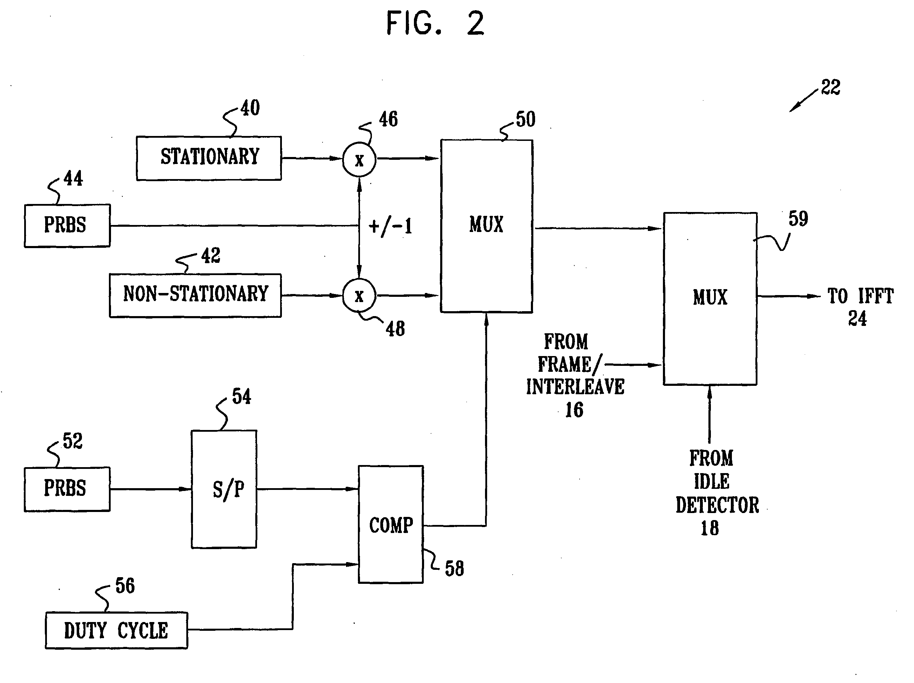

Fig. 2 is a block diagram that schematically illustrates details of encoder 22, in accordance with an alternative embodiment of the present invention. In this embodiment, additionally or alternatively to the above-mentioned decrease in power, the stationary Q-mode signal is switched alternately "on" and "off" with a selected duty cycle. During the "off" periods, only the pilot tone or a limited set of carriers is transmitted. Although this technique, like varying the power of the Q-mode signal, creates some non-stationarity, a limited amount of variation is always allowed. The permitted level of non-stationarity may change from region to region or from country to country based on various factors, such as penetration percentage of legacy systems (which tend to be more vulnerable to non-stationarity), available loop lengths, allowed PSD masks, and typical applications (i.e., data rates).

The duty cycle is preferably chosen based on the amount of variation allowed in the average signal PSD, compared to the nominal or actual transmission level. For example, if the allowed average variation in the transmitted PSD is 4 dB, one possible solution is to switch the Q-mode signal with a duty cycle of 50%, and to allow a peak (negative) variation from the nominal PSD of not more than 1 dB during the "on" periods. It is assumed in this example that only the pilot tone is transmitted during the "off" periods, although this is not a mandatory requirement. The pilot tone may be supplemented with additional carriers if needed in any frequency band in which no non-stationary behavior can be tolerated.

When using an on-off modulated Q-mode signal, the bias current and voltage to line driver 34 are preferably switched in time with the modulation, as described above in order to reduce the power consumption of the transmitter.

One preferred embodiment includes an "on-off" idle signal. The "non" signal is a low PAR signal like Reverb (for ADSL) designed to use some limited set of carriers according to the crosstalk characteristics (to eliminate non-stationarity) and the "off" signal is just the pilot tone. The duty cycle may be decreased if more carriers are used during the "off" periods. There is thus some tradeoff between the duty cycle of the "on-off" signal and the carriers used during the "off" period.

In a preferred embodiment (not illustrated in the figures), a controller monitors the performance of receivers in a neighborhood of transmitter 20. The controller adjusts the power and/or duty cycle of the Q-mode signal as necessary, and optionally other parameters as well, so as to reduce power consumption by the transmitter without causing frequent resetting of the receivers due to non-stationary noise.

Returning now to Fig. 2, the stationary idle signal generated by encoder 22 is output as required from a stationary signal memory 40. The non-stationary idle signal, comprising the pilot tone and possible additional tones, is output from a non-stationary signal memory 42. Preferably, both the stationary and non-stationary signals are based on 4QAM signals, possibly with some limited distortion. The stationary and non-stationary signals are preferably both based on the same nominal signal. Alternatively, the stationary and non-stationary signals may be based on two different nominal signals. Most preferably, both the stationary and non-stationary signals comprise the Reverb signal, as described above, but extend over different ranges of tones, which are defined in accordance with the operating environment and constraints of transmitter 20. In any case, the stationary and non-stationary signals are selected so as to optimize the signal at the line driver input. The carriers to be included in the stationary and non-stationary signals are preferably communicated from the transmitter to the receiver during a pre-startup phase of operation. The G.hs protocol, defined by ITU Recommendation G.994, may be used for this purpose.

Preferably, the phases of successive Q-mode symbols are varied, most preferably by reversing the signs of the complex elements in the Q-mode vector. (This phase reversal corresponds to using a signal similar to the ADSL "Segue" signal in place of the Reverb signal. The difference between this reversed signal and the Segue signal is that in the Segue signal, the pilot tone is not reversed.) The phase reversal is implemented by a pseudo-random bitstream (PRBS) generator 44, outputting values of $\pm 1$ to multipliers 46 and 48. Alternatively, two different PRBS devices independently multiply the stationary and non-stationary signals output by blocks 40 and 42. Most preferably, the phase reversal occurs with a period longer than 4000 symbols and is such as to give, over long time periods, an even distribution of positive and negative phases. Alternatively or additionally, 90° phase shifts may be applied in the frequency or time domain. The phase variation flattens the spectrum of the transmitted signal and prevents both the local receiver and neighboring receivers from detecting and locking onto a bias in the noise generated by transmitter 20.

The stationary and non-stationary Q-mode signals are selected by a multiplexer 50 in alternation, with an average duty cycle that is set in a duty cycle register 56. Preferably, the alternation between the stationary and non-stationary signals is also random, controlled by another pseudo-random bitstream generator 52, which drives a serial to parallel (S/P) block 54 to output random values corresponding to values between 0 and 100. A comparator 58 compares the output of S/P block 54 to the duty cycle value in register 56. When the value output by S/P block 54 is greater than the register value, the comparator drives multiplexer 50 to select the non-stationary signal, while the stationary signal is chosen when the output of S/P block 54 is lower than the register value. Thus, when the duty cycle register is set to 100, only the stationary signal is output, and when the register is set to 0, only the non-stationary signal is output. Thus, in environments that are indifferent to non-stationary crosstalk, transmitter power consumption can be minimized by setting the duty cycle to zero.

As long as idle data detector 18 determines that transmitter 20 is receiving actual data from interface 10, a final multiplexer 59 in encoder 22 selects the actual data passed by framing and interleaving block 16 as input to IFFT block 24. On the other hand, when the idle data detector determines that block 16 is passing idle cells, it triggers multiplexer 59 to convey the Q-mode signal from multiplexer 50 to the IFFT block.

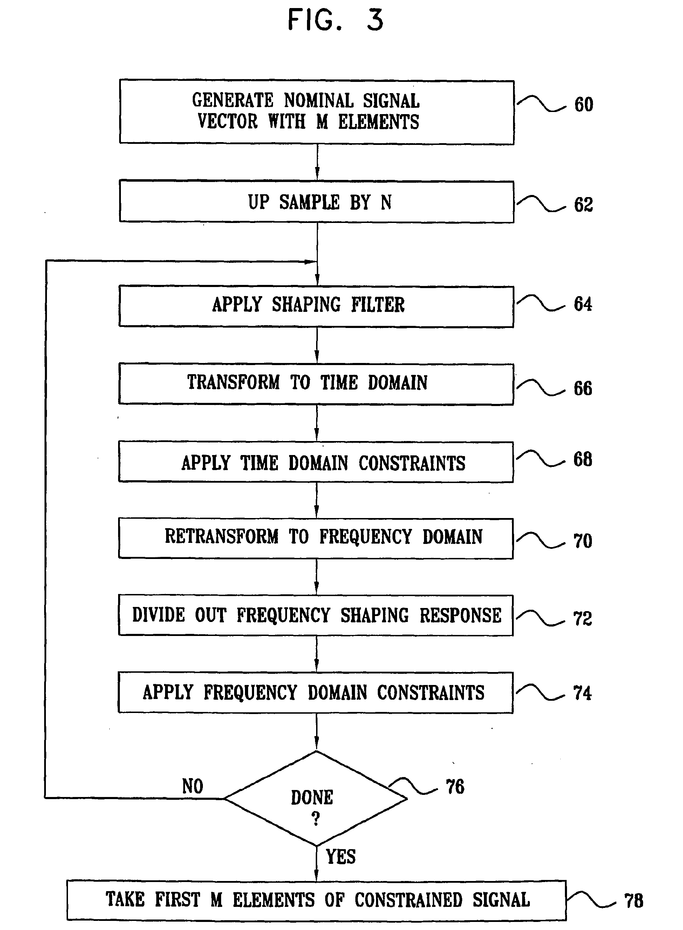

Fig. 3 is a flow chart that schematically illustrates a method for generating an optimized Q-mode signal, based on a nominal signal such as the Reverb signal, in accordance with a preferred embodiment of the present invention.

This method is preferably carried out during a startup phase of transmitter 20, when the utilization of the carriers in normal operation is known. An off-line calculation is also possible, but without adaptation to the actual utilization of carriers, less significant PAR reduction is expected.

In order to optimize the Q-mode signal, the method starts with a nominal signal, such as the Reverb signal, on which the Q-mode signal is to be based. Alternatively, the nominal signal can be selected to be an arbitrary 4QAM signal with constellation points that optimize the expected signal at the line driver input. The result of using such a signal is that lower PAR will be available for a given allowed distortion in the nominal signal. In any case, the nominal signal is created at a generation step 60, in the form of a complex frequency-domain vector with M elements. The value of M corresponds to the Nyquist frequency of the nominal signal. Thus, for ADSL there are M=257 carriers, spanning the range from 0 to 1.104 MHz. Alternatively, the nominal signal may be created directly in the time domain, preferably in the form assumed by the signal following interpolator 26.

At an upsampling step 62, the nominal signal or sequence is interpolated by a factor N, typically N=4. The interpolation in the time domain corresponds to adding zeroes between the actual samples in the signal, without low-pass filtering at this stage. In the frequency domain, the interpolation expands one side spectrum of the signal to N*M carriers, or to N*1.104 MHz in the case of ADSL. At a shaping step 64, the filter response of shaping filter 38, corresponding to digital LPF 28, D/A converter 30 and analog LPF 32, is applied to the upsampled signal. The resultant shaped signal is transformed to the time domain, as a transformation step 66, preferably using an IFFT operation.

At this point the signal corresponds simply to the nominal signal, following interpolation and spectral shaping. At a time-domain processing step 68, predefined time-domain constraints are applied to the signal. Preferably, these constraints include limiting the amplitudes of any peaks in the time-domain signal, so as to bring the PAR of the signal to within a predefined maximum.

The constrained time-domain signal is retransformed to the frequency domain, preferably using a FFT, at a retransformation step 70. The equivalent effect of spectral shaping filter 38 is then divided out of the frequency domain signal, at a filter division step 72. This step is equivalent to finding the signal at the output of interpolator 26 that, after filtering by filter 38, would give the constrained signal found at step 70. At a frequency-domain processing step 74, frequency-domain constraints are applied to this signal. Typically, applying these constraints involves manipulating the complex amplitudes of the vector elements, including operations such as:

- Setting the phase of the pilot tone to a required value, so as to eliminate pilot tone bias.
- Restoring Hermitian symmetry to the signal spectrum, preferably by setting the amplitudes of the out-of-band spectral components (in the range of tones 258-511) to be the complex conjugates of the corresponding passband components (0-255).
- Limiting the amplitudes and phases of the vector elements to within some allowed tolerance of the nominal 4QAM values. Typical tolerances are approximately +/-3db for amplitude and peak phase deviation of approximately 15 degrees.
- Eliminating the use of carries which are not required for the Q-mode signal or are not used in normal operation of the transmitter.

At a completion step 76, the vector generated at step 74 is examined to determine whether it has converged so that the PAR of the resultant Q-mode signal will be below a desired limit. Other signal characteristics may also be considered. If the vector does not meet the convergence criteria, steps 64 through 76 are repeated using this constrained vector as an input. If convergence has been achieved, or if the process has already looped through steps 64 through 76 a predetermined number of times without converging, then the process is terminated. Of the total N*M elements in the constrained vector, only the first M complex elements are saved, and the rest are discarded. In the case of ADSL, there are 256 such elements (since carrier 257 is always zero), which subsequently define the output from signal generator 22 to IFFT machine 24 when transmitter 20 enters Q-mode operation.

It will be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

**Claims**

1. A method for transmission of high-speed digital signals, comprising:

transmitting a data signal over a communication line responsive to input data, which data signal is **characterized**

**by** a frequency spectrum and a power consumption characteristic; and

during an idle interval in the input data, transmitting an idle signal whose frequency spectrum is substantially stationary relative to the frequency spectrum of the data signal and whose power consumption characteristic is substantially reduced relative to the data signal, and **characterized by** transmitting the idle signal, whose frequency spectrum is substantially stationary, in alternation with a non-stationary signal.

2. A method according to claim 1, wherein the power consumption characteristic comprises a peak-to-average ratio (PAR).

3. A method according to any of the preceding claims, wherein transmitting the idle signal comprises generating the idle signal based on a nominal sequence of varying complex values.

4. A method according to claim 3, wherein the stationary idle signal and the non-stationary idle signal are based on respective nominal sequences which are substantially identical.

5. A method according to claim 1, wherein the data signal comprises a discrete multi-tone signal comprising a set of tones, and wherein reducing the power level of the idle signal comprises eliminating one or more of the tones from the idle signal.

6. A method according to claim 1, wherein transmitting the idle signal whose frequency spectrum is substantially stationary in alternation with the non-stationary signal comprises controlling the signals so that a transmit spectrum of the signals is non-stationary only to within an allowed limit of non-stationarity.

7. A method according to claim 1, wherein the non-stationary signal is chosen so as to have a substantially lower power consumption characteristic than the idle signal whose frequency spectrum is substantially stationary.

8. A method according to claim 1, wherein the data and idle signals comprise multiple tones, and wherein the non-stationary signal comprises a substantially reduced number of tones relative to the idle signal whose frequency spectrum is substantially stationary.

9. A method according to claim 8, wherein the non-stationary signal consists of a pilot tone.

10. A method according to claim 1, wherein transmitting the idle signal comprises setting a duty cycle for alternation between the idle signal whose frequency spectrum is substantially stationary and the non-stationary signal, and transmitting the signals in accordance with the set duty cycle.

11. A method according to claim 1, wherein transmitting the idle signal whose frequency spectrum is substantially stationary in alternation with a non-stationary signal comprises intermittently altering the phase of the signals, whereby a spectrum of the signals is flattened, and a bias in the signals is cancelled.

12. A method according to claim 11, wherein intermittently altering the phase of the idle signals comprises shifting the phase at random by multiples of 90 degrees.

13. A method according to any of claims 1-12, wherein transmitting the idle signal comprises intermittently altering a phase of the idle signal, whereby a spectrum of the signal is flattened, and a bias in the signal is cancelled.

14. Apparatus (20) for transmission of high-speed digital signals, comprising: a data encoder (22), which is adapted to receive input data and to generate a stream of data symbols responsive to the input data and further to generate, during an idle interval in the input data, a sequence of idle symbols; a shaping filter (38), coupled to receive the stream of data symbols from the signal generator and to generate, responsive thereto, a data signal **characterized by** a frequency spectrum and a power consumption characteristic, and to receive the sequence of idle symbols and to generate, responsive thereto, a first idle signal whose frequency spectrum is substantially stationary relative to the frequency spectrum of the data signal and having a power consumption characteristic that is substantially reduced relative to the data signal; and a line driver (34), coupled to receive the data signal and the first idle signal from the shaping filter and to transmit the signals over a line to a receiver, **characterized by** the fact that

during the idle interval, the apparatus (20) is adapted to generate the idle symbols so that the first idle signal is transmitted in alternation with a second idle signal that is non-stationary.

15. Apparatus according to claim 14, wherein the data encoder is adapted to control the alternation so that a combined spectrum of the signals transmitted during the idle interval is non-stationary relative to the data frequency spectrum to within an allowed limit of non-stationarity.

16. Apparatus according to claim 14, wherein the power consumption characteristic comprises a peak-to-average ratio (PAR).

17. Apparatus according to any of claims 14-16, wherein the signal generator is adapted to generate the idle symbols based on a nominal sequence of varying complex values.

18. An apparatus according to claim 17, wherein the signal generator is adapted to generate the idle symbols so that the stationary idle signal and the non-stationary idle signal are based on respective nominal sequences which are substantially identical.

19. Apparatus according to claim 17, wherein the data signal comprises a discrete multi-tone signal comprising a set of tones, and wherein a power level of the idle signal is reduced by eliminating one or more of the tones from the idle signal.

20. Apparatus according to any of claims 14-19, wherein the second idle signal is chosen so as to have a substantially lower power characteristic than the first idle signal.

21. Apparatus according to any of claims 14-19, wherein the data and idle signals comprise multiple tones, and wherein the second idle signal comprises a substantially reduced number of tones relative to the first idle signal.

22. Apparatus according to claim 21, wherein the second idle signal consists of a pilot tone.

23. Apparatus according to any of claims 14-19, wherein the first idle signal is transmitted in alternation with the second idle signal in accordance with a preset duty cycle.

24. Apparatus according to claim 14, wherein the data encoder is adapted to intermittently alter a phase of the idle symbols in at least one of the first and second sequence, whereby a spectrum of the idle signals is flattened, and a bias on at least certain tones of the idle signals is eliminated.

25. Apparatus according to claim 24, wherein the data encoder is adapted to alter the phase at random by multiples of 90 degrees.


**Patentansprüche**

1. Verfahren zur Übertragung digitaler Hochgeschwindigkeitssignale, aufweisend:

   Übertragen eines Datensignals über eine Kommunikationsleitung in Abhängigkeit von Eingangsdaten, wobei das Datensignal durch ein Frequenzspektrum und eine Stromverbrauchskenngröße **gekennzeichnet** ist; und während eines Untätigkeitsintervalls bei den Eingangsdaten Übertragen eines Untätigkeitssignals, dessen Frequenzspektrum im wesentlichen stationär relativ zu dem Frequenzspektrum des Datensignals ist und dessen Stromverbrauchskenngröße relativ zu dem Datensignal im wesentlichen vermindert ist, und **gekennzeichnet durch** das Übertragen des Untätigkeitssignals, dessen Frequenzspektrum im wesentlichen stationär ist, abwechselnd mit dem nichtstationären Signal.

2. Verfahren nach Anspruch 1, wobei die Stromverbrauchskenngröße ein Spitzenwert-zu-Durchschnitt-Verhältnis (PAR) umfasst.

3. Verfahren nach irgendeinem der vorstehenden Ansprüche, wobei das Übertragen des Untätigkeitssignals das Erzeugen des Untätigkeitssignals basierend auf einer Nominalsequenz wechselnder komplexer Werte beinhaltet.

4. Verfahren nach Anspruch 3, wobei das stationäre Untätigkeitssignal und das nichtstationäre Untätigkeitssignal auf entsprechenden Nominalsequenzen basiert, welche im wesentlichen identisch sind.

**5.** Verfahren nach Anspruch 1, wobei das Datensignal ein diskretes Multitonsignal umfasst, welches einen Satz von Tönen enthält, und wobei die Verminderung des Stromverbrauchspegels des Untätigkeitssignals das Eliminieren von einem oder mehreren Tönen aus dem Untätigkeitssignal beinhaltet.

**6.** Verfahren nach Anspruch 1, wobei das Übertragen des Untätigkeitssignals, dessen Frequenzspektrum im wesentlichen stationär ist, abwechselnd mit dem nichtstationären Signal das Steuern des Signals umfasst, so dass ein Übertragungsspektrum der Signale nur innerhalb einer erlaubten Grenze der Nichtstationarität nichtstationär ist.

**7.** Verfahren nach Anspruch 1, wobei das nichtstationäre Signal so gewählt ist, dass es eine im wesentlichen niedrigere Stromverbrauchskenngröße aufweist als das Untätigkeitssignal, dessen Frequenzspektrum im wesentlichen stationär ist.

**8.** Verfahren nach Anspruch 1, wobei die Daten- und Untätigkeits-Signale mehrere Töne umfassen und wobei das nichtstationäre Signal eine wesentlich verminderte Anzahl von Tönen relativ zu dem Untätigkeitssignal umfasst, dessen Frequenzspektrum im wesentlichen stationär ist.

**9.** Verfahren nach Anspruch 8, wobei das nichtstationäre Signal aus einem Pilotton besteht.

**10.** Verfahren nach Anspruch 1, wobei das Übertragen des Untätigkeitssignals das Ansetzen eines Arbeitszyklus für das Abwechseln zwischen dem Untätigkeitssignal, dessen Frequenzspektrum im wesentlichen stationär ist, und dem nichtstationären Signal umfasst, und Übertragen der Signale in Übereinstimmung mit dem angesetzten Arbeitszyklus.

**11.** Verfahren nach Anspruch 1, wobei das Übertragen des Untätigkeitssignals, dessen Frequenzspektrum im wesentlichen stationär ist, abwechselnd mit einem nichtstationären Signal das periodische Ändern der Phase der Signale beinhaltet, wodurch ein Spektrum des Signals abgeflacht wird und ein Versatz der Signale ausgelöscht wird.

**12.** Verfahren nach Anspruch 11, wobei das periodische Ändern der Phase des Untätigkeitssignals das zufällige Verschieben der Phase um Mehrfache von 90° beinhaltet.

**13.** Verfahren nach irgendeinem der Ansprüche 1 bis 12, wobei das Übertragen des Untätigkeitssignals das periodische Ändern einer Phase des Untätigkeitssignals beinhaltet, wobei das Spektrum des Signals abgeflacht wird und ein Versatz in dem Signal ausgelöscht wird.

**14.** Vorrichtung (20) zur Übertragung digitaler Hochgeschwindigkeitssignale, aufweisend:

einen Datenencoder (22), der eingerichtet ist, um Eingangsdaten entgegenzunehmen und um einen Strom von Datensymbolen in Abhängigkeit von den Eingangsdaten zu erzeugen und ferner um eine Sequenz von Untätigkeitssymbolen während eines Untätigkeitsintervalls bei den Eingangsdaten zu erzeugen;
einen Formungsfilter (38), der zum Entgegennehmen des Stroms von Datensymbolen aus dem Signalgenerator gekoppelt ist und zum Erzeugen eines durch ein Frequenzspektrum und durch eine Stromverbrauchskenngröße **gekennzeichnet**en Datensignals in Abhängigkeit davon, und zum Entgegennehmen der Sequenz der Untätigkeitssymbole und zum Erzeugen eines ersten Untätigkeitssignals in Abhängigkeit hiervon, dessen Frequenzspektrum relativ zu dem Frequenzspektrum des Datensignals im wesentlichen stationär ist und das eine Stromverbrauchskenngröße aufweist, die im Vergleich zu dem Datensignal im wesentlichen vermindert ist; und
einen Leitungstreiber (34), der zum Entgegennehmen des Datensignals und des ersten Untätigkeitssignals aus dem Formungsfilter und zum Übertragen der Signale über eine Leitung an einen Empfänger gekoppelt ist, **gekennzeichnet durch** die Tatsache, dass
die Vorrichtung (20) während des Untätigkeitsintervalls eingerichtet ist, die Untätigkeitssymbole zu erzeugen, so dass das erste Untätigkeitssignal abwechselnd mit einem zweiten Untätigkeitssignal, das nichtstationär ist, übertragen wird.

**15.** Vorrichtung nach Anspruch 14, wobei der Datenencoder eingerichtet ist, die Abwechslung zu steuern, so dass ein kombiniertes Spektrum der während des Untätigkeitsintervalls übertragenen Signale innerhalb einer erlaubten Grenze der Nichtstationarität nichtstationär bezüglich des Datenfrequenzspektrums ist.

**16.** Vorrichtung nach Anspruch 14, wobei die Stromverbrauchskenngröße ein Spitzenwertzu-Durchschnitt-Verhältnis (PAR) umfasst.

**17.** Vorrichtung nach irgendeinem der Ansprüche 14 bis 16, wobei der Signalgenerator eingerichtet ist, die Untätigkeitssymbole basierend auf einer Nominalsequenz wechselnder komplexer Werte zu erzeugen.

**18.** Vorrichtung nach Anspruch 17, wobei der Signalgenerator eingerichtet ist, die Untätigkeitssymbole zu erzeugen, so dass das stationäre Untätigkeitssignal und das nichtstationäre Untätigkeitssignal auf entsprechenden Nominalsequenzen basieren, welche im wesentlichen identisch sind.

**19.** Vorrichtung nach Anspruch 17, wobei das Datensignal ein diskretes Multitonsignal umfasst, das einen Satz von Tönen umfasst, und wobei ein Stromverbrauchspegel des Untätigkeitssignals durch Eliminieren eines oder mehrere der Töne aus dem Untätigkeitssignal vermindert ist.

**20.** Vorrichtung nach irgendeinem der Ansprüche 14 bis 19, wobei das zweite Untätigkeitssignal derart gewählt ist, dass es eine im wesentlichen niedrigeren Stromverbrauchskenngröße als das erste Untätigkeitssignal aufweist.

**21.** Vorrichtung nach irgendeinem der Ansprüche 14 bis 19, wobei die Daten- und Untätigkeits-Signale mehrere Töne umfassen, und wobei das zweite Untätigkeitssignal im Vergleich mit dem ersten Untätigkeitssignal eine wesentlich verminderte Anzahl von Tönen umfasst.

**22.** Vorrichtung nach Anspruch 21, wobei das zweite Untätigkeitssignal einen Pilotton umfasst.

**23.** Vorrichtung nach irgendeinem der Ansprüche 14 bis 19, wobei das erste Untätigkeitssignal in Übereinstimmung mit einem voreingestellten Arbeitszyklus abwechselnd mit dem zweiten Untätigkeitssignal übertragen wird.

**24.** Vorrichtung nach Anspruch 14, wobei der Datenencoder eingerichtet ist, um periodisch eine Phase der Untätigkeitssymbole in mindestens einer der ersten und der zweiten Sequenz zu ändern, wodurch ein Spektrum des Untätigkeitssignals abgeflacht und ein Versatz auf mindestens bestimmten Tönen des Untätigkeitssignals ausgelöscht wird.

**25.** Vorrichtung nach Anspruch 24, wobei der Datenencoder eingerichtet ist, die Phase zufällig um Vielfache von 90° zu ändern.

**Revendications**

**1.** Procédé pour la transmission de signaux numériques haute vitesse, comprenant:

la transmission d'un signal de données sur une ligne de communication en réponse à des données d'entrée, lequel signal de données est **caractérisé par** un spectre de fréquences et une caractéristique de consommation de puissance ; et
pendant un intervalle de repos dans les données d'entrée, la transmission d'un signal de repos dont le spectre de fréquences est sensiblement stationnaire par rapport au spectre de fréquences du signal de données et dont la caractéristique de consommation de puissance est sensiblement réduite par rapport au signal de données, et **caractérisé par** la transmission du signal de repos, dont le spectre de fréquences est sensiblement stationnaire, en alternance avec un signal non stationnaire.

**2.** Procédé selon la revendication 1, dans lequel la caractéristique de consommation de puissance comprend un rapport valeur de crête sur valeur moyenne (PAR).

**3.** Procédé selon l'une quelconque des revendications précédentes, dans lequel la transmission du signal de repos comprend la génération du signal de repos sur la base d'une séquence nominale de valeurs complexes variables.

**4.** Procédé selon la revendication 3, dans lequel le signal de repos stationnaire et le signal de repos non stationnaire sont basés sur des séquences nominales respectives qui sont sensiblement identiques.

**5.** Procédé selon la revendication 1, dans lequel le signal de données comprend un signal de multitonalité discrète comprenant un ensemble de tonalités, et dans lequel la réduction du niveau de puissance du signal de repos comprend l'élimination d'une ou plusieurs des tonalités du signal de repos.

**6.** Procédé selon la revendication 1, dans lequel la transmission du signal de repos dont le spectre de fréquences est sensiblement stationnaire en alternance avec le signal non stationnaire comprend le contrôle des signaux de sorte qu'un spectre de transmission des signaux soit non stationnaire uniquement à l'intérieur d'une limite autorisée de non-stationnarité.

**7.** Procédé selon la revendication 1, dans lequel le signal non stationnaire est choisi afin d'avoir une caractéristique de consommation de puissance sensiblement inférieure au signal de repos dont le spectre de fréquences est sensiblement stationnaire.

**8.** Procédé selon la revendication 1, dans lequel les signaux de données et de repos comprennent de multiples tonalités, et dans lequel le signal non stationnaire comprend un nombre de tonalités sensiblement réduit par rapport au signal de repos dont le spectre de fréquences est sensiblement stationnaire.

**9.** Procédé selon la revendication 8, dans lequel le signal non stationnaire se compose d'une tonalité pilote.

**10.** Procédé selon la revendication 1, dans lequel la transmission du signal de repos comprend l'établissement d'un cycle d'utilisation pour l'alternance entre le signal de repos dont le spectre de fréquences est sensiblement stationnaire et le signal non stationnaire, et la transmission des signaux conformément au cycle d'utilisation établi.

**11.** Procédé selon la revendication 1, dans lequel la transmission du signal de repos dont le spectre de fréquences est sensiblement stationnaire en alternance avec un signal non stationnaire comprend la modification intermittente de la phase des signaux, moyennant quoi un spectre des signaux est rendu uniforme, et une polarisation dans les signaux est annulée.

**12.** Procédé selon la revendication 11, dans lequel la modification intermittente de la phase des signaux de repos comprend le décalage de la phase aléatoirement par des multiples de 90 degrés.

**13.** Procédé selon l'une quelconque des revendications 1 à 12, dans lequel la transmission du signal de repos comprend la modification intermittente d'une phase du signal de repos, moyennant quoi un spectre du signal est rendu uniforme, et une polarisation dans le signal est annulée.

**14.** Appareil (20) pour la transmission de signaux numériques haute vitesse, comprenant: un codeur de données (22) qui est adapté pour recevoir des données d'entrée et pour générer un flux de symboles de données en réponse aux données d'entrée et en outre pour générer, pendant un intervalle de repos dans les données d'entrée, une séquence de symboles de repos ; un filtre de mise en forme (38) couplé pour recevoir le flux de symboles de données en provenance du générateur de signaux et pour générer, en réponse à cela, un signal de données **caractérisé par** un spectre de fréquences et une caractéristique de consommation de puissance, et pour recevoir la séquence de symboles de repos et pour générer, en réponse à cela, un premier signal de repos dont le spectre de fréquences est sensiblement stationnaire par rapport au spectre de fréquences du signal de données et ayant une caractéristique de consommation de puissance qui est sensiblement réduite par rapport au signal de données ; et un module de commande de ligne (34) couplé pour recevoir le signal de données et le premier signal de repos en provenance du filtre de mise en forme et pour transmettre les signaux sur une ligne à un récepteur, **caractérisé par le fait que** pendant l'intervalle de repos, l'appareil (20) est adapté pour générer les symboles de repos de sorte que le premier signal de repos soit transmis en alternance avec un second signal de repos qui est non stationnaire.

**15.** Appareil selon la revendication 14, dans lequel le codeur de données est adapté pour contrôler l'alternance de sorte qu'un spectre combiné des signaux transmis pendant l'intervalle de repos soit non stationnaire par rapport au spectre de fréquences de données à l'intérieur d'une limite autorisée de non-stationnarité.

**16.** Appareil selon la revendication 14, dans lequel la caractéristique de consommation de puissance comprend un rapport valeur de crête sur valeur moyenne (PAR).

**17.** Appareil selon l'une quelconque des revendications 14 à 16, dans lequel le générateur de signaux est adapté pour générer les symboles de repos sur la base d'une séquence nominale de valeurs complexes variables.

**18.** Appareil selon la revendication 17, dans lequel le générateur de signaux est adapté pour générer les symboles de repos de sorte que le signal de repos stationnaire et le signal de repos non stationnaire soient basés sur des séquences nominales respectives qui sont sensiblement identiques.

**19.** Appareil selon la revendication 17, dans lequel le signal de données comprend un signal de multitonalité discrète comprenant un ensemble de tonalités, et dans lequel un niveau de puissance du signal de repos est réduit par l'élimination d'une ou plusieurs des tonalités du signal de repos.

**20.** Appareil selon l'une quelconque des revendications 14 à 19, dans lequel le second signal de repos est choisi afin d'avoir une caractéristique de consommation de puissance sensiblement inférieure au premier signal de repos.

**21.** Appareil selon l'une quelconque des revendications 14 à 19, dans lequel les signaux de données et de repos comprennent de multiples tonalités, et dans lequel le second signal de repos comprend un nombre de tonalités sensiblement réduit par rapport au premier signal de repos.

**22.** Appareil selon la revendication 21, dans lequel le second signal de repos se compose d'une tonalité pilote.

**23.** Appareil selon l'une quelconque des revendications 14 à 19, dans lequel le premier signal de repos est transmis en alternance avec le second signal de repos conformément à un cycle d'utilisation préétabli.

**24.** Appareil selon la revendication 14, dans lequel le codeur de données est adapté pour modifier par intermittence une phase des symboles de repos dans au moins une de la première et de la seconde séquence, moyennant quoi un spectre des signaux de repos est rendu uniforme, et une polarisation sur au moins certaines tonalités des signaux de repos est éliminée.

**25.** Appareil selon la revendication 24, dans lequel le codeur de données est adapté pour modifier la phase aléatoirement par des multiples de 90 degrés.

FIG. 1

# FIG. 2

EP 1 269 670 B1

# FIG. 3

GENERATE NOMINAL SIGNAL
VECTOR WITH M ELEMENTS — 60

↓

UP SAMPLE BY N — 62

↓

APPLY SHAPING FILTER — 64

↓

TRANSFORM TO TIME DOMAIN — 66

↓

APPLY TIME DOMAIN CONSTRAINTS — 68

↓

RETRANSFORM TO FREQUENCY DOMAIN — 70

↓

DIVIDE OUT FREQUENCY SHAPING RESPONSE — 72

↓

APPLY FREQUENCY DOMAIN CONSTRAINTS — 74

↓

DONE ? — 76

NO

YES

↓

TAKE FIRST M ELEMENTS OF CONSTRAINED SIGNAL — 78

**EP 1 269 670 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 22033400 P
- WO 9952219 A
- EP 0961515 A